# EUROPÄISCHE PATENTANMELDUNG

(11) **EP 2 175 160 A2**
(43) Veröffentlichungstag der Anmeldung: **14.04.2010**
(21) Anmeldenummer: 09171930.2
(22) Anmeldetag: 01.10.2009
(51) Int. Cl.: F16F 9/48, F16F 9/512

(54) **Schwingungsdämpfer mit amplitudenselektiver Dämpfkraft**

(30) Priorität: 07.10.2008 DE 102008042634
(71) Anmelder: ZF Friedrichshafen AG, 88038 Friedrichshafen (DE)
(72) Erfinder: Hammer, Thomas, 97653, Bischofsheim (DE)

(57) **Zusammenfassung**

Schwingungsdämpfer (1) mit amplitudenselektiver Dämpfkraft, umfassend einen Zylinder (3), in dem eine Kolbenstange (5) axial beweglich von einer Kolbenstangenführung (7) geführt wird, wobei an der Kolbenstange ein Kolben (21) mit einer Dämpfventilbestückung (25) und eine Dämpfeinrichtung (41) zur Erzeugung einer amplitudenselektiven Dämpfkraft angeordnet ist, wobei der Kolben den Zylinder in einen kolbenstangenseitigen und einen kolbenstangenfernen Arbeitsraum (17,19) unterteilt, und zwischen dem kolbenstangenseitigen Arbeitsraum und einem Ausgleichsraum (15) des Schwingungsdämpfers ein zum Zylinder ortsfestes Dämpfventil (23) angeordnet ist, das bei einer Ausfahrbewegung der Kolbenstange aus dem Zylinder eine Dämpfkraft erzeugt, und der Kolben an der Kolbenstange eine Dämpfventilbestückung nur für eine Einfahrbewegung aufweist.

## Beschreibung

Die Erfindung betrifft einen Schwingungsdämpfer mit amplitudenselektiver Dämpfkraft gemäß dem Oberbegriff von Patentanspruch 1.

Aus der DE 10 2006 005 935 A1 ist ein gattungsbildender Schwingungsdämpfer bekannt, der an einer Kolbenstange einen Kolben mit jeweils einer Ventilbestückung für eine Durchströmungsrichtung bzw. Bewegungsrichtung der Kolbenstange aufweist. Räumlich in Reihe dazu ist eine Dämpfeinrichtung angeordnet, die für die Funktion der amplitudenselektiven Dämpfkraft vorgesehen ist. Diese Dämpfeinrichtung ist dem Kolben mit seinen Ventilbestückungen jedoch hydraulisch parallel geschaltet.

Ein generelles Problem dieser Konstruktion liegt in dem radialen Bauraumbedarf für die Dämpfventile am Kolben und der nachgeordneten Dämpfeinrichtung. Bei größeren Schwingungsdämpferdurchmessern ist das Konstruktionsprinzip einsetzbar, hingegen werden die Grenzen bei kleineren Schwingungsdämpferdurchmessern erreicht, wie sie z. B. bei kleineren Pkw üblich sind.

Die Aufgabe der vorliegenden Erfindung besteht darin, den gattungsbildenden Schwingungsdämpfer derart weiterzuentwickeln, so dass auch kleinere Schweingungsdämpferdurchmesser realisierbar sind.

Erfindungsgemäß wird die Aufgabe dadurch gelöst, dass zwischen dem kolbenstangenseitigen Arbeitsraum und einem Ausgleichsraum des Schwingungsdämpfers ein zum Zylinder ortsfestes Dämpfventil angeordnet ist, das bei einer Ausfahrbewegung der Kolbenstange aus dem Zylinder eine Dämpfkraft erzeugt, und der Kolben an der Kolbenstange eine Dämpfventilbestückung nur für eine Einfahrbewegung aufweist.

Durch die Abtrennung einer Dämpfventilbestückung vom Kolben steht am Kolben deutlich mehr radialer Bauraum zur Verfügung, da damit auch Durchgangskanäle im Kolben für eine Durchströmungsrichtung entfallen.

Es ist vorgesehen, dass das ortsfeste Dämpfventil zwischen der Kolbenstangenführung und einem Zylinderende axial verspannt ist.

Das ortsfeste Dämpfventil zentriert den Zylinder zur Kolbenstangenführung und bildet dadurch einen Teilabschnitt der Kolbenstangenführung.

Dabei weist das ortsfeste Dämpfventil einen topfförmigen Ventilkörper auf, der einen Zentriersteg für mindestens eine Ventilscheibe aufweist. Es soll ein direkter Kontakt einer Ventilscheibe mit der Kolbenstange verhindert werden.

Durch eine einfache Verlängerung zentriert der Zentriersteg auch den Zylinder zur Kolbenstangenführung.

Gemäß einem vorteilhaften Unteranspruch bestimmt ein zwischen der mindestens einen Ventilscheibe und der Kolbenstangenführung verspannter Anschlagring die maximale Abhubstellung der mindestens einen Ventilscheibe.

Des Weiteren bestimmen die einander zugewandten Flächen des Anschlagrings und der Kolbenstangenführung einen Abflusskanal vom Dämpfventil zum Ausgleichsraum. Durch die Kanalführung zwischen diesen beiden Bauteilen kann der Abflusskanal sehr einfach durch eine offene Rinne gebildet werden, die sich sehr leicht herstellen lässt.

Im Hinblick auf eine definierte Dämpfkraftkennlinie weist der ortsfeste Ventilkörper eine Ringdichtung zur Kolbenstange auf.

Eine weitere Maßnahme zur Einsparung von radialem Bauraum besteht darin, dass die amplitudenabhängige Dämpfeinrichtung nur bei einer Kolbenstangenausfahrbewegung wirksam ist.

Dichtungen zwischen dem Kolben und der amplitudenselektiven Dämpfkrafteinrichtung sind überflüssig, da sich der Kolben direkt an der amplitudenselektiven Dämpfeinrichtung abstützt.

Die amplitudenselektive Dämpfeinrichtung weist eine Distanzhülse auf, die mit einer Mantelfläche der Kolbenstange einen Hauptkanal für den Durchfluss des Dämpfmediums bei einer Kolbenstangeneinfahrbewegung bestimmt, und einen Bypasskanal zu einer zwischen zwei Anschlagflächen sich erstreckende Strömungsverbindung zwischen den beiden Arbeitsräumen bildet, die von einem axial beweglichen Schaltring gesteuert wird, wobei der Bypasskanal von einem Sackloch in Verbindung mit einem Radialkanal gebildet wird, dessen Austrittsöffnung von Schaltring gesteuert wird, wobei sich die Distanzhülse über den gesamten Hubweg des Schaltrings erstreckt. In einem einzigen Bauteil, nämlich der Distanzhülse, sind alle axial verlaufenden Strömungswege sintertechnisch sehr gut umsetzbar ausgeführt.

Des Weiteren besteht die Möglichkeit, dass zwischen einer Unterseite des Kolbens und einer Scheibe der amplitudenselektiven Dämpfeinrichtung ein axial beweglicher Ventilring angeordnet ist. Mit dem axial beweglichen Ventilring kann bei langsamer Kolbenstangenbewegung wirksamer Querschnitt richtungsabhängig in seiner Größe verändert werden.
Als weitere Maßnahme zur Dämpfkraftvariation ist vorgesehen, dass ein kolbenstangenseitiger Drosselkörper zusammen mit dem zylinderseitigen Dämpfventil einen hubabhängigen Zuganschlag bildet. Damit übernimmt das zylinderseitige Dämpfventil eine Doppelfunktion.

In weiterer vorteilhafter Ausgestaltung schränkt der Drosselkörper den Durchtrittsquerschnitt mindestens eines Durchtrittskanals des zylinderseitigen Dämpfventils eint.

Dazu ist der Drosselkörper gegen eine Kraft einer Rückstellfeder, die sich einem an der Kolbenstange fixierten Tragring abstützt axial verschiebbar. Der kolbenstangenseitige Anteil am Zuganschlag beschränkt sich auf wenige und sehr einfach aufgebaute Teile.

Der Drosselkörper ist käfigförmig ausgeführt und verfügt über Schlitze, die den Strömungswiderstand des Drosselkörpers bei inaktivem Zuganschlag verringern.

Anhand der folgenden Figurenbeschreibung soll die Erfindung näher erläutert werden.

### Es zeigt:

- Fig. 1: Schnittdarstellung durch einen Schwingungsdämpfer

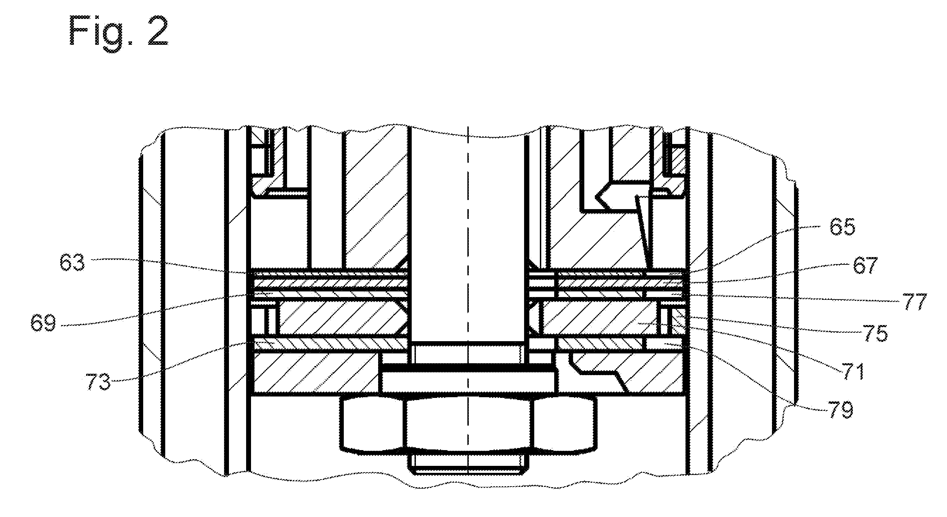

- Fig. 2: Detaildarstellung zur Fig. 1
- Fig. 3: Schwingungsdämpfer nach dem Prinzip der Fig. 1 mit einem Zuganschlag

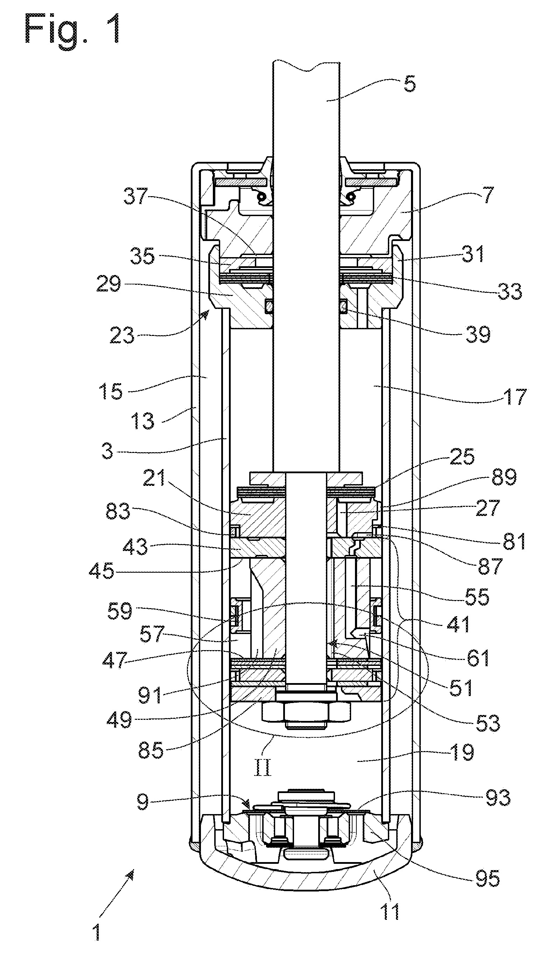

Die Figur 1 zeigt einen Schwingungsdämpfer 1 mit einem inneren mit Dämpfmedium gefüllten Zylinder, in dem eine Kolbenstange 5 axial beweglich gleitet. Der innere Zylinder 3 wird an einem ersten Ende von einer Kolbenstangenführung 7 abgeschlossen. An einem zweiten Ende ist ein an sich bekanntes Bodenventil 9 angeordnet. Das Bodenventil 9 stützt sich auf einem Boden 11 eines äußeren Zylinders 13 ab. Zwischen dem äußeren Zylinder 13 und dem inneren Zylinder 3 erstreckt sich ein Ausgleichsraum 15 für zwei Arbeitsräume 17;19 im inneren Zylinder 3, die von einem Kolben 21 an der Kolbenstange 5 getrennt werden.

Zwischen dem kolbenstangenseitigen Arbeitsraum 17 und dem Ausgleichsraum 15 des Schwingungsdämpfers 1 ist ein zum Zylinder 3 ortsfestes Dämpfventil 23 angeordnet, das bei einer Ausfahrbewegung der Kolbenstange 5 aus dem Zylinder 3 eine Dämpfkraft erzeugt. Der Kolben 21 an der Kolbenstange 5 weist nur eine Dämpfventilbestückung 25 für eine Einfahrbewegung auf. Deshalb benötigt der Kolben 21 auch nur Durchtrittskanäle 27 für eine Durchströmungsrichtung von Dämpfmedium ausgehend vom kolbenstangenfernen Arbeitsraum 19 zum kolbenstangenseitigen Arbeitsraum 17.

Das ortsfeste Dämpfventil 23 ist zwischen der Kolbenstangenführung 7 und einem Zylinderende axial verspannt und weist einen topfförmigen Ventilkörper 29 auf. Der Ventilkörper 29 des ortsfesten Dämpfventils 23 zentriert den inneren Zylinder 3 zur Kolbenstangenführung 7. Dazu weist der Ventilkörper 29 einen Zentriersteg 31 auf, der die Kolbenstangenführung 7 außenseitig umgreift. Des Weiteren zentriert der Zentriersteg 31 außenseitig mindestens eine Ventilscheibe 33 des ortsfesten Dämpfventils 23.

Ein zwischen der mindestens einen Ventilscheibe 33 und der Kolbenstangenführung 7 verspannter Anschlagring 35 bestimmt die maximale Abhubstellung der mindestens einen Ventilscheibe 33. Für die Montage zu einer in sich geschlossenen Baueinheit des ortsfesten Dämpfventils 23 kann der Anschlagring 35 mit dem Innendurchmesser des Zentrierstegs 31 eine Presspassung bilden.

Die einander zugewandten Flächen des Anschlagrings 35 und der Kolbenstangenführung 7 bestimmen einen Abflusskanal 37 vom Dämpfventil 23 zum Ausgleichsraum 15. Zur Vermeidung von Leckströmen weist der ortsfeste Ventilkörper 29 eine Ringdichtung 39 zur Kolbenstange 5 auf.

An der Kolbenstange 5 ist zusätzlich zum Kolben 21 eine nur bei einer Kolbenstangenausfahrbewegung amplitudenabhängige Dämpfeinrichtung 41 wirksam, wobei sich der Kolben 21 direkt an der amplitudenselektiven Dämpfeinrichtung 41 abstützt.

Die amplitudenabhängige Dämpfeinrichtung 41 umfasst eine erste Scheibe 43 mit einer ersten Anschlagfläche 45 und eine zur ersten axial beabstandete zweite Anschlagfläche 47. Zwischen den beiden Anschlagflächen 45;47 weist die die amplitudenselektive Dämpfeinrichtung eine Distanzhülse 49 auf, die mit einer Mantelfläche 51 der Kolbenstange mindestens einen Hauptkanal 53 für den Durchfluss des Dämpfmediums bei einer Kolbenstangeneinfahrbewegung bestimmt. Des Weiteren verfügt die Distanzhülse 49 über einen Bypasskanal 55 zu einer zwischen den beiden Anschlagflächen 45;47 sich erstreckende Strömungsverbindung 57 zwischen den beiden Arbeitsräumen 17;19. Die Strömungsverbindung 57 wird die von einem axial beweglichen Schaltring 59 gesteuert. Der Bypasskanal 55 wird von einem Sackloch in Verbindung mit einem Radialkanal 61 gebildet, dessen Austrittsöffnung von Schaltring 59 gesteuert wird, wobei sich die Distanzhülse 49 über den gesamten Hubweg des Schaltrings 59 erstreckt.

Die zweite Anschlagfläche 47 wird von einer Scheibenanordnung mit einer ersten Voröffnungsscheibe 63 gebildet, die mindestens einen radial verlaufenden Schlitz 65 als Voröffnungsquerschnitt aufweist. Der ersten Voröffnungsscheibe 63 schließen sich eine Zwischenscheibe 67 und eine zweite Voröffnungsscheibe 69 an. Danach folgen eine Distanzscheibe 71 und eine dritte Voröffnungsscheibe 73, wobei zwischen der zweiten und der dritten Voröffnungsscheibe 69;73 ein axial beweglicher Ventilring 75 angeordnet ist. Auch die zweite und die dritte Voröffnungsscheibe 69;73 verfügt über mindestens einen radialen Schlitz als Voröffnungsquerschnitt 77;79.

Ein weiterer Voröffnungsquerschnitt 81 wird von einem zweiten axial beweglicher Ventilring 83 angesteuert, der zwischen einer Unterseite des Kolbens 21 und der Scheibe 43 der amplitudenselektiven Dämpfeinrichtung 41 angeordnet ist.

Bei einer Einfahrbewegung der Kolbenstange 5 wird der kolbenstangenferne Arbeitsraum 19 komprimiert. Das Volumen der in den inneren Zylinder 3 einfahrenden Kolbenstange 5 wird über das Bodenventil 9 in den Ausgleichsraum 15 verdrängt. Der größere Volumenanteil fließt durch axiale Kanäle, die den Hauptkanal 53 zwischen den beiden Arbeitsräumen 17;19 bilden. Ein weiterer Volumenanteil strömt radial zwischen dem Ringspalt einer Befestigungsscheibe 85 und der Innenwandung des inneren Zylinders 3 durch den dritten Voröffnungsquerschnitt 79 in der dritten Voröffnungsscheibe 73 entlang der Distanzscheibe 71 durch den zweiten Voröffnungsquerschnitt 77, der die Dämpfkraft bestimmt. Der weitere Strömungsweg führt in die von dem Schaltring gesteuerte Strömungsverbindung 59 zwischen den beiden Anschlagflächen 45;47. Der geöffnete Radialkanal 87 ermöglicht einen weiteren Strömungsweg durch den Bypasskanal 55 der Distanzhülse 49 durch die Scheibe 43. Zwischen der Oberseite der Scheibe 43 und der Unterseite des Kolbens 21 verläuft ein Radialkanal 87 in Richtung des zweiten axialen Ventilrings 83. Eine axial verlaufende Nut 89 in der Kolbenmantelfläche bildet den Anschluss an den kolbenstangenseitigen Arbeitsraum 17.

Wenn die Kolbenstange 5 eine ausreichend große Einfahrgeschwindigkeit erreicht hat, dann fließt das Dämpfmedium im inneren Zylinder 3 auch über den Hauptkanal 53 durch die Durchtrittskanäle 27 des Kolbens 21, wodurch die Ventilscheibenbestückung 25 vom Kolben 21 abhebt.

Bei einer Kolbenstangenausfahrbewegung wirkt die Ventilbestückung 25 am Kolben 21 wie ein Rückschlagventil. Die Durchtrittskanäle 27 des Hauptkanals sind verschlossen. Das Dämpfmedium strömt durch die axial verlaufende Nut 89 in Richtung des maximal geöffneten Querschnitts am zweiten axial beweglichen Ventilring 83. Über den Radialkanal 87 strömt das Dämpfmedium weiter in den Bypasskanal 55 und weiter über den Radialkanal 61 in der Distanzhülse 49 zur ringförmigen Strömungsverbindung 59 zwischen den beiden Anschlagflächen 45;47 beidseitig des Schaltrings 59. Mindestens eine außenseitige Nut 91 in der Distanzhülse 49 sorgt für einen Druckausgleich innerhalb der ringförmigen Strömungsverbindung 57 beidseitig des Schaltrings 59. Bei einer Kolbenstangenausfahrbewegung bewegt sich der Schaltring 59 in Reibkontakt mit dem inneren Zylinder 3 in Richtung der Anschlagfläche 47. Solange der Radialkanal 61 noch offen ist, wird die Dämpfkraft von dem radialen Schlitz bzw. dem Voröffnungsquerschnitt 79 der dritten Voröffnungsscheibe 73 bestimmt.

Innerhalb des Hubbereichs bis zum Anschlag des Schaltrings 59 an der zweiten Anschlagfläche 47 liegt eine vergleichsweise weiche Dämpfkraft an.

Wenn der Schaltring 59 seine Endposition an der zweiten Anschlagfläche 47 erreicht hat, dann muss das Dämpfmedium bei kleiner Ausfahrgeschwindigkeit durch den Radialkanal 61 über den Voröffnungsquerschnitt 65 der ersten Voröffnungsscheibe 63 entlang des zweiten Ventilrings 71 in den kolbenstangenfernen Arbeitsraum 19 fließen. Dann wird die Dämpfkraft von dem Voröffnungsquerschnitt 65 der ersten Voröffnungsscheibe 63 bestimmt.

Unabhängig von der Ausfahrgeschwindigkeit wird das im kolbenstangenfernen Arbeitsraum 19 fehlende Dämpfmediumvolumen durch ein geöffnetes Rückschlagventil 93 im Bodenventilkörper 95 vom Dämpfmediumvorrat im Ausgleichsraum 15 ersetzt.

Bei größerer Kolbenstangenausfahrgeschwindigkeit wird das Dämpfmedium im kolbenstangenseitigen Arbeitsraum 17 durch das zum inneren Zylinder 3 ortsfeste Dämpfventil 23 in den Ausgleichsraum 15 verdrängt, wobei der Abfluss über einen Abflusskanal 37 zwischen der Anschlagscheibe 35 und der Unterseite der Kolbenstangenführung 7 erfolgt.

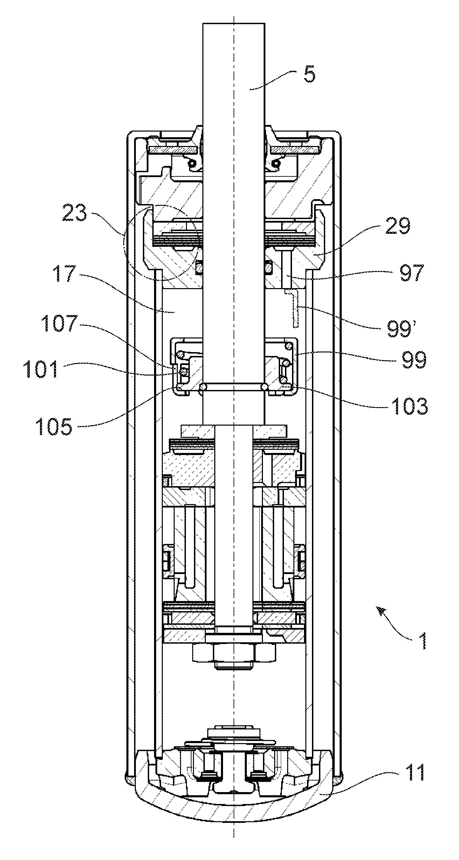

Die Variante nach Fig. 3 verfügt zusätzlich über eine hubabhängige Dämpfkraftsteuerung, indem ein Durchtrittskanal 97 innerhalb des topfförmigen Ventilkörpers 29 von einem kolbenstangenseitigen Drosselkörper 99 teilverschlossen wird. Der Drosselkörper 99 kann sich gegen eine Rückstellfeder 101 in Grenzen axial zur Kolbenstange 5 verschieben. Die Rückstellfeder 101 stützt sich dabei an einem an der Kolbenstange 5 fixierten Tragring 103 ab. Die Kolbenstangeneinfahrbewegung wird von dem Drosselkörper 99 nicht beeinflusst. Auch auf einem größeren Hubbereich in Ausfahrrichtung unterscheidet sich die Wirkungsweise nicht von dem Schwingungsdämpfer gemäß der Fig. 1.

Ab einer definierten Hublage, sinnvollerweise kurz vor der maximalen Ausfahrposition, liegt der käfigförmige Drosselkörper 99' an der Unterseite des Ventilkörpers 29 an und beschränkt den Durchflussquerschnitt des mindestens einen Durchtrittskanals 97. Die weitere Kolbenstangenbewegung kann gegen die Kraft der Rückstellfeder 101 fortgesetzt werden. Dabei wird eine Unterseite 105 des Drosselkörpers 99 von dem Tragring 103 abgehoben, so dass zusätzlich zu mindestens einem Schlitz 107 im Drosselkörper über den dadurch entstandenen Spalt das Dämpfmedium aus dem kolbenstangenseitigen Arbeitsraum 17 in das Dämpfventil 23 einströmen kann.

Aufgrund des eingeschränkten Durchflussquerschnitts des mindestens einen Durchtrittskanals 97 wird die Dämpfkraft angehoben. Wenn sich die Kolbenstange 5 wieder in Richtung des Bodens 11 bewegt und der Tragring 103 am Drosselkörper 99 anliegt, hebt der Drosselkörper 99 wieder von dem topfförmigen Ventilkörper 29 ab. Damit übernimmt das zylinderfeste Dämpfventil 23 eine Zusatzfunktion, da es zusammen mit dem Drosselkörper 99 einen hydraulischen Zuganschlag bildet.

### Bezugszeichenliste

- 1: Schwingungsdämpfer
- 3: innerer Zylinder
- 5: Kolbenstange
- 7: Kolbenstangenführung
- 9: Bodenventil
- 11: Boden
- 13: äußerer Zylinder
- 15: Ausgleichsraum
- 17: kolbenstangenseitiger Arbeitsraum
- 19: kolbenstangenferner Arbeitsraum
- 21: Kolben
- 23: ortsfestes Dämpfventil
- 25: Ventilbestückung
- 27: Durchtrittskanäle
- 29: topfförmiger Ventilkörper
- 31: Zentriersteg
- 33: Ventilscheibe
- 35: Anschlagring
- 37: Abflusskanal
- 39: Ringdichtung
- 41: Dämpfeinrichtung
- 43: erste Scheibe

- 45: erste Anschlagfläche
- 47: zweite Anschlagfläche
- 49: Distanzhülse
- 51: Mantelfläche der Kolbenstange
- 53: Hauptkanal
- 55: Bypasskanal
- 57: Strömungsverbindung
- 59: Schaltring
- 61: Radialkanal
- 63: erste Voröffnungsscheibe
- 65: Voröffnungsquerschnitt
- 67: Zwischenscheibe
- 69: zweite Voröffnungsscheibe
- 71: Distanzscheibe
- 73: dritte Voröffnungsscheibe
- 75: Ventilring
- 77: zweiter Voröffnungsquerschnitt
- 79: dritter Voröffnungsquerschnitt
- 81: Voröffnungsquerschnitt
- 83: zweiter Ventilring
- 85: Befestigungsscheibe
- 87: Radialkanal
- 89: Nut
- 91: außenseitige Nut
- 93: Rückschlagventil
- 95: Bodenventilkörper
- 97: Durchtrittskanal
- 99: Drosselkörper
- 101: Rückstellfeder
- 103: Tragring
- 105: Unterseite des Drosselkörpers
- 107: Schlitz im Drosselkörper

## Patentansprüche

1. Schwingungsdämpfer (1) mit amplitudenselektiver Dämpfkraft, umfassend einen Zylinder (3), in dem eine Kolbenstange (5) axial beweglich von einer Kolbenstangenführung (7) geführt wird, wobei an der Kolbenstange (5) ein Kolben (21) mit einer Dämpfventilbestückung (25) und eine Dämpfeinrichtung (41) zur Erzeugung einer amplitudenselektiven Dämpfkraft angeordnet ist, wobei der Kolben (21) den Zylinder (3) in einen kolbenstangenseitigen und einen kolbenstangenfernen Arbeitsraum (17;19) unterteilt,
**dadurch gekennzeichnet,**
**dass** zwischen dem kolbenstangenseitigen Arbeitsraum (17) und einem Ausgleichsraum (15) des Schwingungsdämpfers (1) ein zum Zylinder (3) ortsfestes Dämpfventil (23) angeordnet ist, das bei einer Ausfahrbewegung der Kolbenstange (7) aus dem Zylinder (3) eine Dämpfkraft erzeugt, und der Kolben (21) an der Kolbenstange (7) eine Dämpfventilbestückung (25) nur für eine Einfahrbewegung aufweist.

2. Schwingungsdämpfer nach Anspruch 1,
**dadurch gekennzeichnet,**
**dass** das ortsfeste Dämpfventil (23) zwischen der Kolbenstangenführung (7) und einem Zylinderende axial verspannt ist.

3. Schwingungsdämpfer nach Anspruch 2,
**dadurch gekennzeichnet,**
**dass** das ortsfeste Dämpfventil (23) den Zylinder (3) zur Kolbenstangenführung (7) zentriert.

4. Schwingungsdämpfer nach Anspruch 1,
**dadurch gekennzeichnet,**
**dass** das ortsfeste Dämpfventil (23) einen topfförmigen Ventilkörper (29) aufweist, der einen Zentriersteg (31) für mindestens eine Ventilscheibe (33) aufweist.

5. Schwingungsdämpfer nach den Ansprüchen 3 und 4,
**dadurch gekennzeichnet,**
**dass** der Zentriersteg (31) den Zylinder (3) zur Kolbenstangenführung (7) zentriert.

6. Schwingungsdämpfer nach Anspruch 2,
**dadurch gekennzeichnet,**
**dass** ein zwischen der mindestens einen Ventilscheibe (33) und der Kolbenstangenführung (7) verspannter Anschlagring (35) die maximale Abhubstellung der mindestens einen Ventilscheibe (33) bestimmt.

7. Schwingungsdämpfer nach Anspruch 6,
**dadurch gekennzeichnet,**
**dass** die einander zugewandten Flächen des Anschlagrings (35) und der Kolbenstangenführung (7) einen Abflusskanal (97) vom Dämpfventil (23) zum Ausgleichsraum (15) bestimmen.

8. Schwingungsdämpfer nach Anspruch 1,
**dadurch gekennzeichnet,**
**dass** der ortsfeste Ventilkörper (23) eine Ringdichtung (39) zur Kolbenstange (7) aufweist.

9. Schwingungsdämpfer nach Anspruch 1,
**dadurch gekennzeichnet,**
**dass** die amplitudenabhängige Dämpfeinrichtung (41) nur bei einer Kolbenstangenausfahrbewegung wirksam ist.

10. Schwingungsdämpfer nach Anspruch 1,
**dadurch gekennzeichnet,**
**dass** sich der Kolben (21) direkt an der amplitudenselektiven Dämpfeinrichtung (41) abstützt.

11. Schwingungsdämpfer nach Anspruch 1,
**dadurch gekennzeichnet,**
**dass** die amplitudenselektive Dämpfeinrichtung (41) eine Distanzhülse (49) aufweist, die mit einer Mantelfläche der Kolbenstange (5) einen Hauptkanal (53) für den Durchfluss des Dämpfmediums bei einer Kolbenstangeneinfahrbewegung bestimmt, und einen Bypasskanal (55) zu einer zwischen zwei Anschlagflächen (45;47) sich erstreckende Strömungsverbindung (57) zwischen den beiden Arbeitsräumen (17;19) bildet, die von einem axial beweglichen Schaltring (59) gesteuert wird, wobei der Bypasskanal (55) von einem Sackloch in Verbindung mit einem Radialkanal (61) gebildet wird, dessen Austrittsöffnung von Schaltring (59) gesteuert wird, wobei sich die Distanzhülse (49) über den gesamten Hubweg des Schaltrings (59) erstreckt.

12. Schwingungsdämpfer nach Anspruch 10,
**dadurch gekennzeichnet,**
**dass** zwischen einer Unterseite des Kolbens (21) und einer Scheibe (83) der amplitudenselektiven Dämpfeinrichtung (41) ein axial beweglicher Ventilring (83) angeordnet ist.

13. Schwingungsdämpfer nach Anspruch 1,
**dadurch gekennzeichnet,**
**dass** ein kolbenstangenseitiger Drosselkörper (99) zusammen mit dem zylinderseitigen Dämpfventil (23) einen hubabhängigen Zuganschlag bildet.

14. Schwingungsdämpfer nach Anspruch 13,
**dadurch gekennzeichnet,**
**dass** der Drosselkörper (99) den Durchtrittsquerschnitt mindestens eines Durchtrittskanals (97) des zylinderseitigen Dämpfventils (23) einschränkt.

15. Schwingungsdämpfer nach Anspruch 13,
**dadurch gekennzeichnet,**
**dass** der Drosselkörper (99) gegen eine Kraft einer Rückstellfeder (101), die sich einem an der Kolbenstange (5) fixierten Tragring (103) abstützt, axial verschiebbar ist.

16. Schwingungsdämpfer nach Anspruch 13,
**dadurch gekennzeichnet,**
**dass** der Drosselkörper (99) käfigförmig ausgeführt ist.
